# EUROPÄISCHE PATENTANMELDUNG

(11) **EP 4 525 291 A1**
(43) Veröffentlichungstag der Anmeldung: **19.03.2025**
(21) Anmeldenummer: 23197723.2
(22) Anmeldetag: 15.09.2023
(51) Int. Cl.: H02M 7/06, H02M 7/217, H02M 1/32, H02M 1/36

(54) **NETZTEIL FÜR EXPLOSIONSGESCHÜTZTE ANWENDUNGEN**

(71) Anmelder: Pepperl+Fuchs SE, 68307 Mannheim (DE)
(72) Erfinder: Jung, Martin, 68307 Mannheim (DE)
(74) Vertreter: Banse & Steglich Patentanwälte PartmbB

(57) **Zusammenfassung**

Die Erfindung betrifft ein Netzteil zum Betrieb eines elektronischen Geräts in einem explosionsgeschützten Bereich, umfassend:
- eine Einrichtung (2) zum Bereitstellen einer gleichgerichteten Eingangsspannung (U_{E});
- eine Zwischenkreiskapazität (5) zum Puffern einer Zwischenkreisspannung;
- eine Phasenabschnittsteuerung (4), die gesteuert ist, um während eines Zeitabschnitts, in dem die gleichgerichtete Eingangsspannung (U_{E}) ansteigt und zwischen einer unteren (Uu) und oberen Spannungsschwelle (Uo) liegt, die gleichgerichtete Eingangsspannung an die Zwischenkreiskapazität (5) anzulegen und in den übrigen Zeitabschnitten die gleichgerichtete Eingangsspannung von der Zwischenkreiskapazität (5) zu trennen;
- eine Wandlerschaltung (7), die ausgebildet ist, um die Zwischenkreisspannung (Uz) in eine Ausgangsspannung zu wandeln.

## Beschreibung

### Technisches Gebiet

Die Erfindung betrifft Netzteile zur Stromversorgung von elektrischen Anwendungen im explosionsgeschützten Bereich. Die Erfindung betrifft weiterhin Maßnahmen zum Vereinfachen eines Schaltungsdesigns für ein Netzteil zum Betrieb von elektrischen Geräten im explosionsgeschützten Bereich.

### Technischer Hintergrund

Bei der Entwicklung von elektronischen Geräten für den Einsatz in explosionsgeschützten Bereichen der Zone 2, bei denen eine Eingangsspannung von z.B. größer als 80 V (nach IEC 60079-7) zur Versorgung benutzt werden darf, wie beispielsweise Netzspannung 230 V, sind entsprechend Gefahrenschutzregelungen besonders Anforderungen an das Schaltungsdesign und das Layout vorgegeben. Dabei müssen zwischen den Komponenten sowie zwischen einzelnen Anschlüssen an einer Komponente Trenn- und Kriechstrecken eingehalten werden, so dass die Netzteilelektronik in der Regel diskret aufgebaut werden muss. Dadurch können moderne hochintegrierte Netzteilbauelemente, integrierte Netzteil-ICs (Step-down ICs) und dergleichen nicht eingesetzt werden. Diskret aufgebaute Netzteilelektronik weist jedoch einen geringeren Wirkungsgrad und höheren Platzbedarf auf. Zudem ist die Prüfung auf Nonkonformität aufwendiger, da deutlich mehr Komponenten und deren Abstände geprüft werden müssen.

Weiterhin kann ein höherer Fertigungsaufwand auftreten, da durch die höhere Anzahl unterschiedlicher Komponenten die Wahrscheinlichkeit einer Bauteilabkündigung steigt und bei dem Ersatz der betreffenden Komponenten dann ebenfalls die Einschränkungen in Bezug auf die Komponentenauswahl gelten.

Werden Netzteile mit einer Spannungsversorgung von 230 V für den explosionsgeschützten Bereich vorgesehen, ergibt sich in der Regel als Zwischenkreisspannung in dem Netzteil eine Spannung von über 80 V. Dies erfordert die diskrete Ausbildung der Netzteilelektronik mit den oben genannten Nachteilen.

Es ist Aufgabe der vorliegenden Erfindung, ein verbessertes Design für ein Netzteil zur Stromversorgung von explosionsgeschützten elektronischen Geräten zur Verfügung zu stellen, das in vereinfachter Weise aufgebaut werden kann und bei dem insbesondere weniger Einschränkungen für den Aufbau der Schaltung berücksichtigt werden muss.

### Offenbarung der Erfindung

Diese Aufgabe wird durch das Netzteil für die Stromversorgung eines elektronischen Geräts im explosionsgeschützten Bereich gemäß Anspruch 1 gelöst.

Weitere Ausgestaltungen sind in den abhängigen Ansprüchen angegeben.

Gemäß einem Aspekt ist ein Netzteil zum Betrieb eines elektronischen Geräts in einem explosionsgeschützten Bereich vorgesehen, umfassend:
- eine Einrichtung zum Bereitstellen einer gleichgerichteten Eingangsspannung;
- eine Zwischenkreiskapazität zum Puffern einer Zwischenkreisspannung;
- eine Phasenabschnittsteuerung, die gesteuert ist, um während eines Zeitabschnitts, in dem die gleichgerichtete Eingangsspannung ansteigt und zwischen einer unteren und oberen Spannungsschwelle liegt, die gleichgerichtete Eingangsspannung an die Zwischenkreiskapazität anzulegen und in den übrigen Zeitabschnitten die gleichgerichtete Eingangsspannung von der Zwischenkreiskapazität zu trennen;
- eine Wandlerschaltung, die ausgebildet ist, um die Zwischenkreisspannung in eine Ausgangsspannung zu wandeln.

Weiterhin kann die Einrichtung zum Bereitstellen einer gleichgerichteten Eingangsspannung einen passiven Gleichrichter und insbesondere eine EMV-Schutzschaltung umfassen.

In der Regel sehen Netzteile für den Betrieb von elektronischen Geräten im explosionsgeschützten Bereich vor, aus einer Netzspannung von 110 VAC bzw. 230 VAC eine Gleichspannung von zwischen 5 und 48 V zu generieren. Dies erfolgt häufig durch Bereitstellen einer gleichgerichteten Zwischenkreisspannung, deren Spannungsniveau sich an der anliegenden Versorgungsspannung, d. h. der Netzspannung, orientiert und somit die eingangs beschriebene Spannungsgrenze übersteigt.

Erfindungsgemäß ist für ein solches Netzteil nun vorgesehen, die Eingangsspannung des Netzteils unmittelbar nach der Gleichrichtung z.B. mithilfe einer Phasenabschnittssteuerung auf eine Spannung von unter 80 V zu reduzieren und diese als Zwischenkreisspannung bereitzustellen. Die reduzierte Spannung kann mithilfe einer Zwischenkreiskapazität gepuffert werden.

Durch die Begrenzung der Zwischenkreisspannung auf eine Spannung unter die Spannungsgrenze der Explosionsschutzspannung von 80 V wird für die nachfolgenden Schaltungsteile die Notwendigkeit des Vorsehens von Isolations- und Kriechstrecken zwischen den Komponenten für eine Montage im explosionsgeschützten Bereich vermieden. Es können somit effiziente, kompakte integrierte Netzteillösungen, wie beispielsweise einen integrierten Step-down-Wandler zum Wandeln der Zwischenkreisspannung in eine Netzteilausgangsspannung verwendet werden, anstatt aufwendige diskrete Lösungen mit geringerem Wirkungsgrad und höherem Platzbedarf verwenden zu müssen. Zudem ist der Prüfaufwand für die Sicherstellung der Normkonformität enorm.

Die Reduzierung der gleichgerichteten Eingangsspannung auf eine Spannung unter der Explosionsschutzspannung von 80 V kann mithilfe einer Phasenabschnittssteuerung und der Zwischenkreiskapazität erreicht werden.

Die Phasenabschnittssteuerung kann mithilfe einer Steuerschaltung und einem niederohmigen Leistungshalbleiterschalter, wie beispielsweise einem Leistungs-MOSFET, ausgebildet sein. Die Steuerschaltung kann in Form einer einfachen Analogschaltung ausgebildet sein, die bei Erreichen der Zielspannung, d. h. bei Erreichen einer oberen Spannungsschwelle, die als eine Spannung etwas unterhalb der Explosionsschutzspannung, wie z.B. zwischen 80% und 95% der Explosionsschutzspannung bzw. zwischen 70 und 75 Volt gewählt ist, ein Steuersignal erzeugt, um den Leistungshalbleiterschalter auszuschalten, und bei einer unteren Spannungsschwelle, die niedriger als die obere Spannungsschwelle gewählt ist, den Leistungshalbleiterschalter wieder einzuschalten. Alternativ kann die obere Spannungsschwelle unterhalb der Explosionsschutzspannung abhängig von einem vorgegebenen Leistungsbedarf, insbesondere des elektronischen Geräts, eingestellt sein. Die obere und untere Spannungsschwelle, die Eingangsspannung, die gleichgerichtete Eingangsspannung und die Zwischenkreisspannung können hierin als betragsmäßige Spannungsangaben aufgefasst werden.

Die Steuerschaltung kann einen Mikrocontroller umfassen, wobei insbesondere der Mikrocontroller weiterhin ausgebildet ist, um ein durch das Netzteil betriebene elektronisches Gerät zu steuern. So kann der Leistungshalbleiterschalter auch mithilfe eines Mikrocontrollers geschaltet werden, der in Abhängigkeit der Eingangsspannung des Netzteils, der Eingangsfrequenz und der Ausgangsleistung des Netzteils den Betriebszustand optimiert und die obere und untere Spannungsschwelle einhält. Das Optimieren des Betriebszustands kann beispielsweise durch das Auslassen einzelner Halbwellen zum Laden der Zwischenkreiskapazität oder durch Auswahl eines Spannungsniveaus der Zwischenkreiskapazität erfolgen. Die gewählte obere Spannungsschwelle unterhalb der Explosionsschutzspannung kann dann abhängig von dem Leistungsbedarf der nachfolgenden Geräte eingestellt werden. Insbesondere kann die Mikrocontroller-Lösung dann angewendet werden, wenn sich in dem elektronischen Gerät ohnehin ein Mikrocontroller befindet, der zum Betreiben des Netzteils ebenfalls verwendet werden kann.

Es kann vorgesehen sein, dass die Phasenabschnittssteuerung gesteuert ist, um bei Eingangsspannungen von unter der Explosionsschutzspannung die gleichgerichtete Eingangsspannung dauerhaft an die Zwischenkreiskapazität anzulegen.

Weiterhin kann die Steuereinheit ausgebildet sein, um bei Eingangsspannungen von unter der Explosionsschutzspannung die Phasenabschnittssteuerung zu deaktivieren, da keine Spannungsreduzierung für die Zwischenkreisspannung vorgesehen werden muss.

Gemäß einem weiteren Aspekt ist ein Verfahren zum Betreiben eines Netzteils zum Betrieb eines elektronischen Geräts in einem explosionsgeschützten Bereich vorgesehen, wobei das Netzteil eine Einrichtung zum Bereitstellen einer gleichgerichteten Eingangsspannung, eine Zwischenkreiskapazität zum Puffern einer Zwischenkreisspannung und eine Wandlerschaltung aufweist, die ausgebildet ist, um die Zwischenkreisspannung in eine Ausgangsspannung zu wandeln, wobei während eines Zeitabschnitts, in dem die gleichgerichtete Eingangsspannung ansteigt und zwischen einer unteren und oberen Spannungsschwelle liegt, die gleichgerichtete Eingangsspannung an die Zwischenkreiskapazität angelegt wird und in den übrigen Zeitabschnitten die gleichgerichtete Eingangsspannung von der Zwischenkreiskapazität getrennt wird.

### Kurzbeschreibung der Zeichnungen

Ausführungsformen werden nachfolgend anhand der beigefügten Zeichnungen näher erläutert. Es zeigen:
- Figur 1: eine schematische Darstellung eines Netzteils für ein elektronisches Gerät zum Betrieb in einem explosionsgeschützten Bereich gemäß einer ersten Ausführungsform;
- Figur 2: ein Diagramm zur Veranschaulichung der zeitlichen Verläufe der gleichgerichteten Eingangsspannung, der Zwischenkreisspannung und eines Kondensatorstroms des Zwischenkreiskondensators;
- Figur 3: eine schematische Darstellung eines Netzteils für ein elektronisches Gerät zum Betrieb in einem explosionsgeschützten Bereich gemäß einer weiteren Ausführungsform.

### Beschreibung von Ausführungsformen

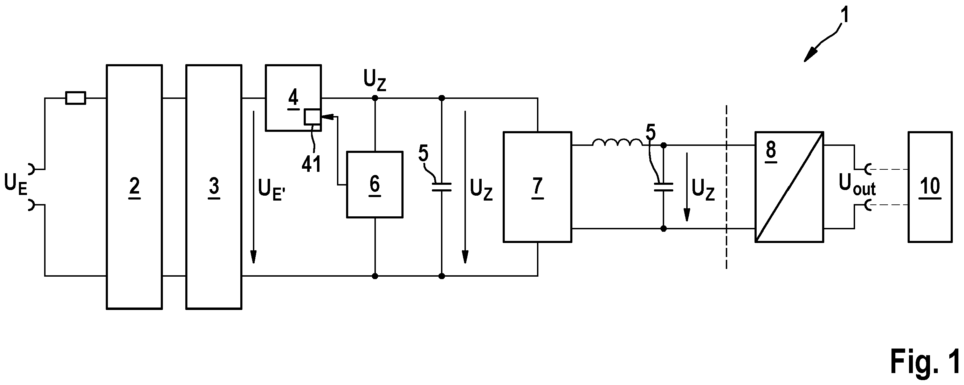

Figur 1 zeigt eine schematische Darstellung eines Netzteils 1 für ein elektronisches Gerät 10, das in einem explosionsgeschützten bzw. explosionsgefährdeten Bereich betrieben werden soll. Im explosionsgeschützten Bereich sind entsprechend Normvorgaben der IEC 60079-7 Spannungen über einer Explosionsschutzspannung von 80 V nur zulässig, wenn entsprechende Isolations- und Kriechstrecken zwischen Komponenten, d. h. elektronischen Bauteilen, eingehalten werden. Das Netzteil weist einen Eingang für das Anlegen einer Eingangsspannung U_{E}, typischerweise eine Netzspannung von 120 VAC, 230 VAC, auf, die mithilfe eines Gleichrichters 2 gleichgerichtet werden.

Mithilfe einer nachfolgenden EMV-Schutzschaltung 3 werden Störsignale aus der gleichgerichteten Spannung entfernt. Ausgangsseitig der EMV-Schutzschaltung 3 liegt nun eine gleichgerichtete Eingangsspannung U_{E'} an. Aufgrund der anliegenden Netzspannung ist die gleichgerichtete Eingangsspannung U_{E'} in der Regel größer ist als die Explosionsschutzspannung, insbesondere von 80 V.

Nun wird eine Spannungsreduzierschaltung 4 vorgesehen, die mithilfe einer Phasenabschnittssteuerung realisiert sein kann. Die Spannungsreduzierschaltung 4 kann abhängig von einer ausgangsseitig erzeugten Zwischenkreisspannung Uz, die in einer Zwischenkreiskapazität 5 gespeichert wird, die gleichgerichtete Eingangsspannung U_{E'} mit der Zwischenkreiskapazität 5 verbinden oder davon trennen.

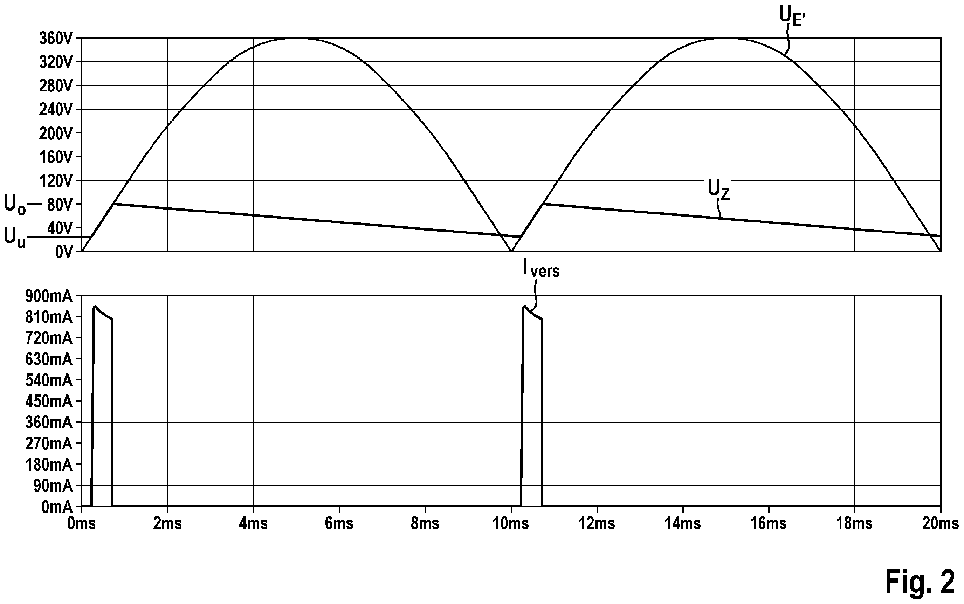

Die nach der Gleichrichtung erhaltene gleichgerichtete Eingangsspannung U_{E'} weist einen Spannungsverlauf mit positiven Halbwellen auf, wie in dem Diagramm der Figur 2 dargestellt. Die Phasenabschnittssteuerung wird nun so betrieben, dass in geeigneter Weise in einem Phasenwinkelbereich eines ansteigenden Abschnitts der gleichgerichtete Eingangsspannung U_{E'}, in dem der aktuelle Spannungswert der gleichgerichteten Eingangsspannung U_{E'} zwischen einer unteren Uᵤ und einer oberen Spannungsschwelle Uₒ liegt, die gleichgerichtete Eingangsspannung U_{E'} an den Zwischenkreiskondensator 5 angelegt wird und außerhalb des Spannungsbereichs oder bei einem abfallenden Abschnitt der gleichgerichtete Eingangsspannung U_{E'} davon getrennt wird.

Die untere Spannungsschwelle Uᵤ liegt unterhalb der einzustellenden Zwischenkreisspannung Uz und damit unterhalb der Explosionsschutzspannung von üblicherweise 80 Volt. Beispielsweise kann die untere Spannungsschwelle Uᵤ zwischen 60 % und 70 % der Explosionsschutzspannung und die obere Spannungsschwelle Uₒ , die der einzustellenden Zwischenkreisspannung Uz entspricht, zwischen 75% und 90% der Explosionsschutzspannung betragen.

Während des Anliegens der gleichgerichteten Eingangsspannung U_{E'} fließt ein signifikanter Ladestrom in die Zwischenkreiskapazität 5, wie ebenfalls aus dem Diagramm der Figur 2 ersichtlich ist.

Der Phasenwinkelbereich, in dem die gleichgerichtete Eingangsspannung U_{E'} an die Zwischenkreiskapazität 5 angelegt wird, endet vorzugsweise mit der einzustellenden Zwischenkreisspannung Uz . Man erkennt in Figur 2 die Halbwellen der gleichgerichteten Eingangsspannung U_{E'} und den Stromverlauf zu den Phasenwinkelbereichen, zu denen die gleichgerichtete Eingangsspannung U_{E'} an die Zwischenkreiskapazität 5 angelegt wird. Die Ansteuerung kann entsprechend mithilfe einer Steuereinheit 6 realisiert werden, die einen Leistungshalbleiterschalter 41 der Phasenabschnittssteuerung 4 öffnet, sobald die gleichgerichtete Eingangsspannung U_{E'} das Niveau der oberen Spannungsschwelle Uₒ erreicht hat, und diesen schließt, sobald die gleichgerichtete Eingangsspannung U_{E'} in der nächsten Halbwelle wieder ansteigt und eine untere Spannungsschwelle Uᵤ überschreitet. Die Steuereinheit 6 kann beispielsweise einen Schmitt-Trigger umfassen.

Die obere Spannungsschwelle kann der einzustellende Zwischenkreisspannung entsprechen und, wie oben angegeben, zwischen 75 % und 90 % der Explosionsschutzspannung von 80 Volt betragen. Die untere Spannungsschwelle kann fest vorgegeben, relativ zur oberen Spannungsschwelle definiert sein, wie z.B. zwischen 10 -20 % unterhalb der oberen Spannungsschwelle, oder lastabhängig von der ausgangsseitig des Netzteils abgerufenen Leistung bzw. des Ausgangsstroms festgelegt werden. So kann die einzustellende Zwischenkreisspannung Uz auch abhängig von einem Leistungsbedarf des nachgeschalteten elektronischen Geräts 10 eingestellt werden.

Mit der Zwischenkreiskapazität 5 kann ein Step-down-Konverter 7 verbunden sein, der in an sich bekannter Weise die Zwischenkreisspannung Uz auf die gewünschte Netzteilausgangsspannung für das elektronische Gerät 10 reduziert. Das elektronische Gerät 10 kann zudem über einen weiteren DC/DC-Wandler 8 zur galvanischen Trennung mit dem Netzteil 1 verbunden sein.

Der Step-down-Wandler 7 kann insbesondere in integrierter Aufbauweise implementiert sein, da die Anforderungen an Isolations- und Kriechstrecken für den Explosionsschutz bei Spannungsniveaus unterhalb der Explosionsschutzspannung von 80 Volt nicht erfüllt werden müssen.

Die Phasenabschnittsteuerung kann, wie in der Ausführungsform der Figur 1 dargestellt, mithilfe eines Mikrocontrollers als Teil der Steuereinheit 6 ausgebildet sein, der die Zwischenkreisspannung Uz über der Zwischenkreiskapazität 5 misst und bei Erreichen der entsprechenden unteren Spannungsschwelle den Leistungshalbleiterschalter 41 der Phasenabschnittsteuerung 4 zu geeigneten Zeitpunkten schließt, um die Zwischenkreisspannung Uz mit dem ansteigenden Verlauf der Halbwelle der gleichgerichteten Eingangsspannung zwischen der unteren und oberen Spannungsschwelle Uᵤ, Uₒ aufzuladen. Bei einem Zeitpunkt des Erreichens der oberen Spannungsschwelle, die der vorgegebenen Zwischenkreisspannung Uz entsprechen kann, wird der Leistungshalbleiterschalter 41 gesteuert durch die Steuereinheit 6 / den Mikrocontroller wieder geöffnet und erst wieder bei einer ansteigenden Spannung der nächsten Halbwelle in entsprechender Weise geschlossen.

Je nach Leistungsabnahme durch ein nachgeschaltetes technisches Gerät 10 kann das Schließen des Leistungshalbleiterschalters für einen oder mehrere Ladezyklen unterbrochen werden, wenn die Zwischenkreiskapazität 5 ausreichend Ladung für den Betrieb des technischen Geräts bereitstellen kann. Weiterhin kann auch die obere Spannungsschwelle Uₒ abhängig von einer Leistungsaufnahme eingestellt werden. Diese zeigt sich beispielsweise an dem Maß eines Gradienten der Zwischenkreisspannung nach dem Öffnen des Leistungshableiterschalters 41 oder kann von dem technischen Gerät 10 direkt signalisiert werden.

In einer weiteren Ausführungsform kann die Phasenabschnittssteuerung 4 ohne zusätzliche Beeinflussung durch die Zwischenkreisspannung Uz betrieben werden. Dies reduziert den Schaltungsaufwand, reduziert aber die Genauigkeit, mit welcher die obere Spannungssschwelle Uₒ erreicht werden kann (z.B. über verschiedene Lasten und Temperaturen). Auch das Auslassen einzelner Ladezyklen oder das Anpassen der Spannungsschwelle Uₒ an verschiedene Lasten kann so nicht realisiert werden.

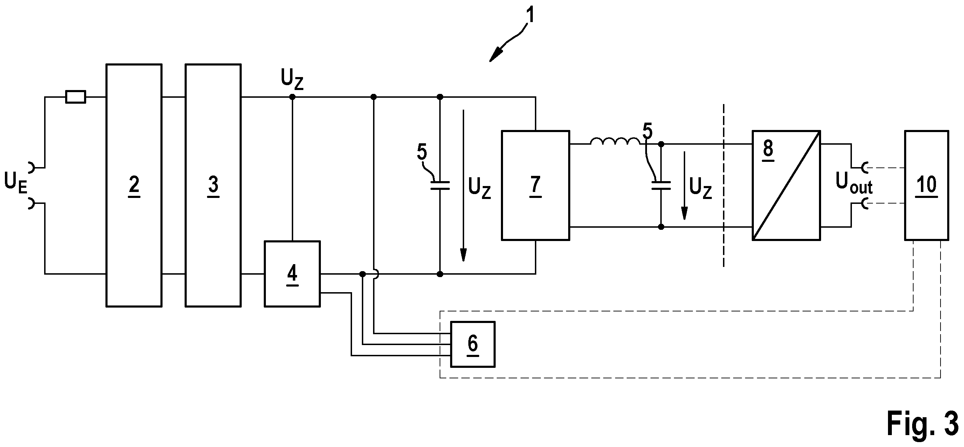

Die Mikrocontroller-Steuerung hat den Vorteil, dass wie in der Ausführungsform der Figur 3 skizziert, die realisierte Funktion der Steuereinheit 6 gemeinsam mit einer Funktion eines Mikrocontrollers für das durch das Netzteil 1 betriebene elektronische Gerät 10 implementiert werden kann. Somit wird nur eine Steuereinheit 6 benötigt und der Bauelementeaufwand kann erheblich reduziert werden. Eine solche Realisierung ist insbesondere dann möglich, wenn das Netzteil und das elektronische Gerät 10 in einer gemeinsamen Baugruppe implementiert sind.

Ferner kann vorgesehen sein, dass bei einer Eingangsspannung, die unter der Explosionsschutzspannung liegt, die Spannungsreduzierschaltung vollständig deaktiviert wird und die Eingangsspannung direkt an der Zwischenkreiskapazität angelegt wird. Dazu kann der Leistungshalbleiterschalter 41 dauerhaft geschlossen werden. Somit können Schaltungsverluste in der Spannungsreduzierschaltung entsprechend reduziert werden, da diese zum Einhalten der Anforderungen an den Explosionsschutz nicht erforderlich ist.

## Patentansprüche

1. Netzteil (1) zum Betrieb eines elektronischen Geräts (10) in einem explosionsgeschützten Bereich, umfassend:
- eine Einrichtung (2) zum Bereitstellen einer gleichgerichteten Eingangsspannung (U_{E});
- eine Zwischenkreiskapazität (5) zum Puffern einer Zwischenkreisspannung;
- eine Phasenabschnittsteuerung (4), die gesteuert ist, um während eines Zeitabschnitts, in dem die gleichgerichtete Eingangsspannung (U_{E}) ansteigt und zwischen einer unteren (Uᵤ) und oberen Spannungsschwelle (Uₒ) liegt, die gleichgerichtete Eingangsspannung an die Zwischenkreiskapazität (5) anzulegen und in den übrigen Zeitabschnitten die gleichgerichtete Eingangsspannung von der Zwischenkreiskapazität (5) zu trennen;
- eine Wandlerschaltung (7), die ausgebildet ist, um die Zwischenkreisspannung (Uz) in eine Ausgangsspannung zu wandeln.

2. Netzteil (1) nach Anspruch 1, wobei die Einrichtung zum Bereitstellen einer gleichgerichteten Eingangsspannung einen passiven Gleichrichter (2) und insbesondere eine EMV-Schutzschaltung umfasst.

3. Netzteil (1) nach Anspruch 1 oder 2, wobei die obere Spannungsschwelle (Uₒ) unter einer vorgegebenen Explosionsschutzspannung von insbesondere 80 Volt liegt, wobei die obere Spannungsschwelle (Uₒ) insbesondere zwischen 80 % und 95 % der Explosionsschutzspannung beträgt oder wobei die obere Spannungsschwelle (Uₒ) unterhalb der Explosionsschutzspannung abhängig von einem vorgegebenen Leistungsbedarf, insbesondere des elektronischen Geräts (10), eingestellt ist.

4. Netzteil (1) nach einem der Ansprüche 1 bis 3, wobei die Steuereinheit (6) ausgebildet ist, um das Schließen des Halbleiterschalters (41) für einen oder mehrere Zyklen zu unterbrechen, wenn die untere Spannungsschwelle (Uᵤ) nicht unterschritten wird.

5. Netzteil (1) nach einem der Ansprüche 1 bis 4, wobei die Wandlerschaltung (7) einen Step-Down-Converter (7) umfasst.

6. Netzteil (1) nach einem der Ansprüche 1 bis 5, wobei eine Steuerschaltung (6) ausgebildet ist, um die Phasenabschnittsteuerung, die einen Leistungshalbleiterschalter (41) umfasst, zu steuern.

7. Netzteil (1) nach Anspruch 6, wobei die Steuerschaltung (6) einen Mikrocontroller umfasst, wobei insbesondere der Mikrocontroller weiterhin ausgebildet ist, um ein durch das Netzteil (1) betriebenes elektronisches Gerät (10) zu steuern.

8. Netzteil (1) nach Anspruch 7, wobei die Steuerschaltung (6) ausgebildet ist, um in Abhängigkeit der Eingangsspannung des Netzteils (1), der Eingangsfrequenz und der Ausgangsleistung des Netzteils (1) die obere und/oder untere Spannungsschwelle (Uₒ, Uᵤ) festzulegen und/oder während einer oder mehrerer Halbwellen die gleichgerichtete Eingangsspannung nicht an die Zwischenkreiskapazität (5) anzulegen.

9. Netzteil (1) nach einem der Ansprüche 1 bis 8, wobei die Phasenabschnittssteuerung (4) gesteuert ist, um bei Eingangsspannungen (U_{E}) von unter der Explosionsschutzspannung die gleichgerichtete Eingangsspannung dauerhaft an die Zwischenkreiskapazität (5) anzulegen.

10. Verfahren zum Betreiben eines Netzteils (1) zum Betrieb eines elektronischen Geräts (10) in einem explosionsgeschützten Bereich, wobei das Netzteil eine Einrichtung (2) zum Bereitstellen einer gleichgerichteten Eingangsspannung (U_{E}), eine Zwischenkreiskapazität (5) zum Puffern einer Zwischenkreisspannung und eine Wandlerschaltung (7) aufweist, die ausgebildet ist, um die Zwischenkreisspannung (Uz) in eine Ausgangsspannung zu wandeln, wobei während eines Zeitabschnitts, in dem die gleichgerichtete Eingangsspannung (U_{E}) ansteigt und zwischen einer unteren (Uᵤ) und oberen Spannungsschwelle (Uₒ) liegt, die gleichgerichtete Eingangsspannung an die Zwischenkreiskapazität (5) angelegt wird und in den übrigen Zeitabschnitten die gleichgerichtete Eingangsspannung von der Zwischenkreiskapazität (5) getrennt wird.
